# EUROPÄISCHE PATENTSCHRIFT

(11) **EP 2 500 630 B1**
(45) Veröffentlichungstag und Bekanntmachung des Hinweises auf die Patenterteilung: **01.02.2017**
(21) Anmeldenummer: 12158769.5
(22) Anmeldetag: 09.03.2012
(51) Int. Cl.: F21V 5/00, F21V 3/04, B29D 11/00

(54) **Transparente Optik bzw. Linse einer KFZ-Beleuchtungseinrichtung**
Transparent lens of a motor vehicle lighting device
Optique transparente ou lentille d'un dispositif d'éclairage d'un véhicule automobile

(30) Priorität: 16.03.2011 DE 102011014113
(43) Veröffentlichungstag der Anmeldung: 19.09.2012
(73) Patentinhaber: Automotive Lighting Reutlingen GmbH, 72762 Reutlingen (DE)
(72) Erfinder: Dr. Hamm, Michael, 72800 Eningen u. A. (DE); Fadel, Kamislav, 70188 Stuttgart (DE); Stade, Florian, 44359 Dortmund (DE); Stauß, Benjamin, 22559 Hamburg (DE)
(74) Vertreter: DREISS Patentanwälte PartG mbB

(56) Entgegenhaltungen:
- WO-A1-2011/026237
- DE-A1- 2 607 231
- DE-A1- 3 809 969
- DE-A1-102004 046 408
- DE-A1-102008 003 929
- DE-A1-102008 034 153
- DE-T2- 69 802 620
- DE-U1- 29 717 698
- FR-A1- 2 770 617
- FR-A1- 2 803 791
- JP-A- H02 139 213
- JP-A- H05 169 488
- US-B2- 6 992 804

## Beschreibung

Die vorliegende Erfindung betrifft eine nach einem Mehrschicht-Spritzgussverfahren hergestellte transparente Optik einer Beleuchtungseinrichtung eines Kraftfahrzeugs, durch die bei eingeschalteter Beleuchtungseinrichtung Lichtstrahlen hindurchtreten.

Ferner betrifft die Erfindung ein Projektionsmodul eines Kraftfahrzeugscheinwerfers. Das Modul umfasst mindestens eine Lichtquelle zum Aussenden von Licht, mindestens eine Primäroptik zum Bündeln zumindest eines Teils des ausgesandten Lichts und mindestens eine Sekundäroptik zum Abbilden zumindest eines Teils des gebündelten Lichts auf einer Fahrbahn vor dem Fahrzeug zur Erzielung einer gewünschten Lichtverteilung.

Schließlich betrifft die vorliegende Erfindung eine Beleuchtungseinrichtung eines Kraftfahrzeugs. Die Beleuchtungseinrichtung umfasst mindestens eine nach einem Mehrschicht-Spritzgussverfahren hergestellte transparente Optik, durch die bei eingeschalteter Beleuchtungseinrichtung Lichtstrahlen hindurchtreten.

Eine nach einem Mehrschicht-Spritzgussverfahren hergestellte transparente Optik, ein Projektionsmodul eines Kraftfahrzeugscheinwerfers sowie eine Beleuchtungseinrichtung eines Kraftfahrzeugs der eingangs genannten Art ist aus der DE 297 17 698 U bekannt.

Aus der DE 698 02 620 T2 ist eine mehrfarbige Abdeckscheibe für eine Kraftfahrzeugleuchte bekannt. Durch die Wölbung der Abdeckscheibe wird keine Linsenfunktion erzielt. Die Idee ist, die Abdeckscheibe von der konkaven Beleuchtungsseite aus zu spritzen, damit auf der konvexen äußeren oder Ansichtsseite keine Abdrücke der Einspritzstellen und Oberflächenspannungen auftreten und die Abdeckscheibe von außen problemlos mit einer Schutzschicht gegen ultraviolette Strahlung versehen werden kann. Es ist kein Mehrschicht-Spritzgussverfahren offenbart.

Aus der DE 10 2008 034 153 ist eine transparente Optik in Form einer plankonvexen Linse bekannt, die drei Schichten aufweist und nach einem Mehrschicht-Spritzgussverfahren hergestellt wird. Eine Verwendung der Linse in einer Beleuchtungseinrichtung eines Kraftfahrzeugs ist nicht offenbart. Außerdem ist nicht offenbart, dass zwischen zwei Schichten der Optik ein optisch wirksames Element eingebracht ist.

Ferner sind aus dem Stand der Technik Projektionsmodule für Kraftfahrzeugscheinwerfer bekannt, die als Lichtquellen Halogen- oder Gasentladungslampen oder eine oder mehrere Halbleiterlichtquellen, insbesondere Leuchtdioden, aufweisen. Ein Projektionsmodul umfasst mindestens eine Lichtquelle zum Aussenden von Licht, mindestens eine Primäroptik zum Bündeln des ausgesandten Lichts sowie mindestens eine Sekundäroptik zum Abbilden des gebündelten Lichts auf einer Fahrbahn vor dem Fahrzeug zur Erzeugung einer gewünschten Lichtverteilung. Die Primäroptik kann als ein Reflektor oder als eine Vorsatzoptik aus transparentem Material mit total reflektierenden Eigenschaften ausgebildet sein, die hindurchtretendes Licht mittels Totalreflektion und/oder Brechung an den Grenzflächen der Vorsatzoptik bündelt. Selbstverständlich kann ein Projektionsmodul auch mehrere Reflektoren oder Vorsatzoptiken aufweisen. Als Sekundäroptik kommt vorzugsweise eine refraktive Optik, insbesondere eine asphärische Linse oder Projektionslinse, zum Einsatz. Seit kurzem sind auch sogenannte LED-Projektionsmodule bekannt, die mehrere LEDs als Lichtquellen, mehrere Vorsatzoptiken sowie eine Projektionslinse aufweisen. Gemeinsam ist all diesen Projektionsmodulen, dass sie eine Projektionslinse besitzen, welche frei von Unterteilungen, Störelementen oder ähnlichem ist und in der Kontur im Allgemeinen rund ist.

Um die lichttechnischen Eigenschaften eines Projektionsmoduls zu verbessern, insbesondere bei Projektionsmodulen zur Erzeugung einer abgeblendeten Lichtverteilung mit einer im Wesentlichen horizontalen Helldunkelgrenze, ist es aus dem Stand der Technik bekannt, Licht streuende Mikrostrukturierungen zur gezielten Verunschärfung der Helldunkelgrenze auf die Linsenoberfläche aufzubringen. Dabei wird von einer im Wesentlichen horizontalen Helldunkelgrenze gesprochen, da diese üblicherweise einen ersten horizontalen Abschnitt auf der Gegenverkehrsseite und einen gegenüber dem ersten Abschnitt höher verlaufenden zweiten horizontalen Abschnitt auf der eigenen Verkehrsseite sowie einen dritten Abschnitt als Übergang zwischen den beiden Abschnitten aufweist, wobei der dritte Abschnitt schräg, insbesondere mit einem 15°-Anstieg, oder stufenförmig verlaufen kann. Selbstverständlich kann die Helldunkelgrenze auch über ihre gesamte Breite auf der gleichen Höhe verlaufen, so dass es sich um eine vollständig horizontale Helldunkelgrenze handelt. Ferner ist es bspw. aus der DE 10 2007 049 835 A1 bekannt, diverse Mikrostrukturen und Zylinderelemente zum Ablenken zumindest eines Teils des durch die Linse hindurchtretenden Lichts in einen Bereich oberhalb der Helldunkelgrenze (den sog. Overhead-Bereich) auf die Linsenoberfläche aufzubringen.

Aus der DE 10 2004 011 104 A1 sowie aus der DE 101 21 387 A1 sind insbesondere aus Designgründen auf die Linsenoberfläche aufgebrachte Embleme bekannt. Diese Embleme sind beispielsweise Zeichen oder Symbole des Fahrzeug-, Linsen- oder des Scheinwerferherstellers. Die genannten Druckschriften beschränken sich allerdings auf das Aufbringen der Embleme auf der (üblicherweise ebenen oder nur geringfügig gewölbten) Rückseite der Projektionslinse, die in Richtung Primäroptik gerichtet ist. Aus der DE 10 2004 046 408 A1 sind ferner transparente Optiken für Kraftfahrzeugscheinwerfer bekannt, bei denen mittels Laser-Bearbeitung Linien, Schraffuren oder ähnliches auf oder in die Optiken auf- bzw. eingebracht werden.

Da die Gehäuse von modernen Scheinwerfern in Lichtaustrittsrichtung üblicherweise durch eine klare Abdeckscheibe ohne optisch wirksame Elemente verschlossen sind, ist die Projektionslinse eines Projektionsmoduls des Scheinwerfers von außen durch die Abdeckscheibe sichtbar. Deshalb bestimmt die Projektionslinse das äußere Erscheinungsbild eines Kraftfahrzeugscheinwerfers ganz entscheidend und stellt eine wesentliche Komponente des Designkonzepts des gesamten Scheinwerfers dar. Die individuelle Ausgestaltung von Projektionslinsen beziehungsweise von in Kraftfahrzeugbeleuchtungseinrichtungen eingesetzten transparenten Optiken im Allgemeinen, wird in Zukunft an Bedeutung gewinnen, um Alleinstellungsmerkmale gegenüber Wettbewerbern zu schaffen. Hier gilt es nun, entsprechende transparente Optiken für Beleuchtungseinrichtungen und geeignete Herstellungsverfahren vorzuschlagen, die eine schnelle, einfache, kostengünstige, lang anhaltende und zuverlässig in hohen Stückzahlen wiederholt realisierbare Individualisierung von transparenten Optiken von Beleuchtungseinrichtungen für Kraftfahrzeuge ermöglichen.

Zur Lösung dieser Aufgabe wird ausgehend von der nach einem Mehrschicht-Spritzgussverfahren hergestellten transparenten Optik der eingangs beschriebenen Art vorgeschlagen, dass die transparente Optik als eine Projektionslinse eines Projektionsmoduls eines Kraftfahrzeugscheinwerfers ausgebildet ist und dass das mindestens eine optisch wirksame Element wie das Spritzen einer zusätzlichen Schicht im Rahmen des Mehrschicht-Spritzgussverfahrens hergestellt ist.

Neue Technologien im Bereich des Kunststoff-Spritzgusses, sogenannte Mehrschichtspritzverfahren, erlauben die Erzeugung von transparenten Optiken mit in den Optikkörper eingebrachten absorbierenden oder teilabsorbierenden optisch wirksamen Elementen. Der Begriff der zumindest teilweise absorbierenden Elemente umfasst auch verschiedene Farbeinschlüsse in der Optik sowie farbige Beschichtungen auf der Optik. Die optisch wirksamen Elemente können beispielsweise als prismatische Elemente in die transparente Optik eingebracht werden. Wichtig beim Einbringen der optisch wirksamen Elemente in die transparente Optik ist es, dass durch die optisch wirksamen Elemente die resultierende Lichtverteilung nicht so weit variiert bzw. beeinträchtigt wird, dass die gesetzlichen Anforderungen an die Lichtverteilung nicht mehr erfüllt werden können. Die in die transparente Optik eingebrachten optisch wirksamen Elemente müssen also definierte fotometrische Mindestanforderungen erfüllen.

Die transparente Optik wird nach einem Mehrschicht-Spritzgussverfahren aus transparenten Kunststoffmaterialien hergestellt. Ein solches Verfahren ist bspw. in der nachveröffentlichten DE 10 2010 033 902 ausführlich beschrieben. Hinsichtlich des Verfahrens zur Herstellung einer transparenten Optik und der Ausgestaltung eines entsprechenden Werkzeugs wird ausdrücklich auf diese Druckschrift Bezug genommen.

Die optisch wirksamen Elemente werden in den Optikkörper eingespritzt. Bei dem Mehrschicht-Spritzgussverfahren kann das Einspritzen der optisch wirksamen Elemente dem Spritzen einer der Schichten der Optik entsprechen. So ist es beispielsweise denkbar, dass in einem ersten Schritt eine erste Schicht der transparenten Optik gespritzt wird. Darauf werden dann in einem zweiten Schritt die optisch wirksamen Elemente gespritzt, die dann in einem anschließenden dritten Schritt durch eine weitere Schicht der transparenten Optik umspritzt werden. Vom Ablauf des Herstellungsverfahrens her wird das Einspritzen der optisch wirksamen Elemente also wie das Spritzen einer zusätzlichen Schicht im Rahmen des Mehrschicht-Spritzgussverfahrens behandelt.

Die optisch wirksamen Elemente bestehen vorzugsweise aus absorbierenden oder teilabsorbierenden Kunststoffmaterialien. Das für die optisch wirksamen Elemente verwendete Material kann sowohl von der Art als auch von der Farbe her von dem für die transparente Optik verwendeten Material abweichen oder das gleiche Material sein. Die Art des Materials kann den Materialtyp, aber auch eine gezielte Verunreinigung (sog. Dotierung) des Materials mit Fremdmaterialien, insbesondere Fremdkörpern (bspw. kleinen Metallpartikeln oder Farbpartikeln), umfassen. Die Farbe des Materials kann durch das Einbringen von beliebigen Farbstoffen (fest oder flüssig) in das Kunststoffmaterial des optisch wirksamen Elements variiert werden. Auch das Einbringen von Farbstoffen, die in Abhängigkeit von der Temperatur unterschiedliche Farben annehmen, ist denkbar.

Die erfindungsgemäße transparente Optik hat den Vorteil, dass sie schnell, einfach, flexibel und kostengünstig auch in großen Stückzahlen hergestellt werden kann. Ferner erlaubt das Einbringen des mindestens einen optischen Elements in die Optik während des Mehrschicht-Spritzgussverfahrens eine besonders präzise Ausgestaltung und Anordnung des optischen Elements. Insgesamt weist die transparente Optik eine besonders hohe Präzision auf und ist trotzdem kostengünstig. Dadurch eignet sie sich besonders gut für den Einsatz in einer Kraftfahrzeugbeleuchtungseinrichtung, insbesondere als eine Projektionslinse eines Projektionsmoduls eines Kraftfahrzeugscheinwerfers.

Es wird vorgeschlagen, dass das Einbringen des mindestens einen optisch wirksamen Elements im Rahmen der Herstellung der transparenten Optik durch Einspritzen von Material und anschließendes Umspritzen mit Material der Optik erfolgt. Ebenfalls möglich, aber nicht von der vorliegenden Erfindung umfasst ist die Möglichkeit, das optisch wirksame Element im Rahmen der Herstellung der transparenten Optik durch Anordnen eines Einlegeteils oder einer Einlegefolie in der transparenten Optik und anschließendes Umspritzen mit Material der Optik einzubringen. Dabei wird bspw. im Rahmen des Mehrschicht-Spritzgussverfahrens in einem ersten Schritt eine erste Schicht der transparenten Optik gespritzt. Darauf wird dann in einem zweiten Schritt das Einlegeteil oder die Einlegefolie aufgebracht und dann in einem anschließenden dritten Schritt durch eine weitere Schicht der transparenten Optik umspritzt. Das Einlegeteil kann eine beliebige Form, selbst eine beliebige dreidimensionale Form, Oberflächenstruktur und Farbe aufweisen. Es ist auch denkbar, nach dem oben beschriebenen Verfahren in mehreren Schritten nacheinander mehrere Schichten mit Einlegeteilen oder Einlegefolien in die transparente Optik einzubringen.

Gemäß einer bevorzugten Ausführungsform wird vorgeschlagen, dass das mindestens eine optisch wirksame Element Licht abschattende, Licht streuende und/oder Licht umlenkende Eigenschaften aufweist. Das optisch wirksame Element kann also auf das Element auftreffendes Licht zumindest teilweise absorbieren, streuen oder nach der Art eines Reflektors gezielt umlenken. Dies gilt auch für entgegen einer Lichtaustrittsrichtung auf das optisch wirksame Element auftreffendes Licht, bspw. bei einem Blick von außerhalb der Beleuchtungseinrichtung durch eine Abdeckscheibe in das Innere der Beleuchtungseinrichtung auf das optisch wirksame Element, so dass das optisch wirksame Element eine bestimmte Wirkung beim Betrachter erzeugen kann.

Gemäß einer anderen vorteilhaften Weiterbildung der Erfindung wird vorgeschlagen, dass die transparente Optik während des Betriebs der Beleuchtungseinrichtung eine inhomogene Dichteverteilung der durch ihre Lichtdurchtrittsfläche hindurchtretenden Lichtstrahlen aufweist, so dass sich Bereiche mit einer niedrigeren Strahldichte als in anderen Bereichen der Lichtdurchtrittsfläche ergeben, wobei das mindestens eine optisch wirksame Element in einem Bereich niedrigerer Strahldichte ausgebildet ist. Die Bereiche mit einer niedrigereren Strahldichte werden auch als Verarmungsbereiche bezeichnet. Bestimmte Komponenten der Beleuchtungseinrichtung, bspw. die Primäroptik(en) oder die Sekundäroptik, sofern sie nicht selbst die transparente Optik darstellt, können derart ausgebildet werden, dass der Strahlengang in der Beleuchtungseinrichtung gezielt so ausgelegt ist, dass Verarmungsbereiche der Strahlverteilung im Bereiche einer Lichtdurchtrittsebene der transparenten Optik entstehen. In diesen Verarmungsbereichen werden vorzugsweise die optisch wirksamen Elemente angeordnet. Dadurch kann erreicht werden, dass sich die resultierende Lichtverteilung durch die eingebrachten optisch wirksamen Elemente nicht oder nur geringfügig verändert.

Verarmungsbereiche der transparenten Optik können beispielsweise erzeugt werden, indem in einem einzelnen Reflektor eine oder mehrere Lichtquellen (z.B. LEDs oder LED-Arrays) derart angeordnet werden, dass die wesentlichen Anteile der Lichtbündel der einzelnen Lichtquellen voneinander getrennt, insbesondere zueinander beabstandet, verlaufen. Dazu können die Lichtquellen zueinander derart angeordnet sein, dass die Hauptabstrahlrichtungen der Lichtquellen in einem Winkel zueinander stehen, der mindestens so groß wie der Abstrahlwinkel der Lichtquellen ist. Ferner ist es denkbar, dass durch verschiedene Lichtquellen in Verbindung mit einer jeweils einer der Lichtquellen zugeordneten Primäroptiken (z.B. Reflektor oder Vorsatzoptik aus transparentem Material) unabhängige Lichtbündel erzeugt werden, die in geeigneter Ausrichtung und Ausgestaltung zu den gewünschten Verarmungsbereichen der transparenten Optik führen. Innerhalb der Strahlbündel können durch gezielte, lokale Deformationen der Primäroptiken, bspw. von Reflektorflächen eines Reflektors oder von Grenzflächen, Lichteintritts- und/oder - austrittsflächen einer Vorsatzoptik, weitere Verarmungsbereiche erzeugt werden. Damit die Verarmungsbereiche in der transparenten Optik nicht zu Inhomogenitäten in der durch die transparente Optik erzeugten Lichtverteilung führen, kann eine Oberflächenkrümmung einer Lichteintrittsfläche und/oder einer Lichtaustrittsfläche der transparenten Optik, bei Bedarf auch außerhalb der Verarmungsbereiche, lokal variiert werden.

Auf die beschriebene Weise kann eine mit der erfindungsgemäßen transparenten Optik versehene Beleuchtungseinrichtung trotz der in der Optik ausgebildeten optisch wirksamen Elemente eine den gesetzlichen Anforderungen (z.B. ECE- oder SAE-Regelung) entsprechende Lichtverteilung erzeugen. Insbesondere kann bspw. ein Scheinwerfer ein Abblendlicht erzeugen, das trotz der in einer Linse des Scheinwerfers ausgebildeten Designelemente die gesetzlichen Anforderungen erfüllt.

Die in die Verarmungsbereiche eingebrachten optisch wirksamen Elemente können bspw. Licht absorbierende, teilabsorbierende, verspiegelte, teilverspiegelte oder mattierte Flächen umfassen. Vorzugsweise besteht das mindestens eine optisch wirksame Element aus einem anderen Material als das angrenzende Material der transparenten Optik oder das mindestens eine optisch wirksame Element weist eine andere Farbe auf als das angrenzende Material der transparenten Optik. Es ist möglich, aber nicht von der vorliegenden Erfindung umfasst, dass die optischen Elemente in den Verarmungsbereichen in Form von erhabenen oder vertieften Bereichen angeordnet sind. Alternativ und ebenfalls nicht von der vorliegenden Erfindung umfasst können die optischen Elemente auch dadurch ausgebildet werden, dass das Material der transparenten Optik in den Verarmungsbereichen zumindest bereichsweise in der gesamten Materialstärke der Optik komplett ausgespart ist. In diesem Fall wären die optischen Elemente also als beliebig ausgestaltete und geformte Schlitze, Löcher oder sonstige Aussparungen in der transparenten Optik realisiert.

Die transparente Optik kann als ein beliebiges Bauteil einer Kraftfahrzeugbeleuchtungseinrichtung ausgebildet sein.

Vorzugsweise ist die transparente Optik bei in ein Kraftfahrzeug eingebauter Beleuchtungseinrichtung von außerhalb des Fahrzeugs bei einem Blick durch die Abdeckscheibe der Beleuchtungseinrichtung sichtbar. Die transparente Optik hat also vorzugsweise eine Auswirkung auf das Design der Beleuchtungseinrichtung. Durch das mindestens eine in die transparente Optik eingebrachte optisch wirksame Element kann somit auch das äußere Erscheinungsbild bzw. das Design der Beleuchtungseinrichtung beeinflusst werden. Für derartige transparente Optiken einer Beleuchtungseinrichtung kann das Einbringen von optisch wirksamen Elementen aus Designgründen besonders interessant sein.

Erfindungsgemäß ist die transparente Optik als eine Projektionslinse eines Projektionsmoduls eines Kraftfahrzeugscheinwerfers ausgebildet. Es ist aber auch denkbar, aber nicht von der vorliegenden Erfindung umfasst, dass die transparente Optik als eine aus transparentem Material, insbesondere Kunststoff oder Glas, gefertigte Primäroptik mit totalreflektierenden Eigenschaften zum Bündeln von hindurchtretendem Licht mittels Totalreflektion und/oder Brechung an den Grenzflächen der Primäroptik (sog. Vorsatzoptik) ausgebildet ist. Ferner ist es denkbar, aber ebenfalls nicht von der Erfindung umfasst, dass die transparente Optik als ein beliebiger Lichtleitkörper, insbesondere als ein Lichtleiter, als eine Linse, als eine Abdeckscheibe der Beleuchtungseinrichtung oder als ein beliebig anderes transparentes Bauteil der Beleuchtungseinrichtung, durch das beim Betrieb der Beleuchtungseinrichtung Licht hindurchtritt, ausgebildet ist.

Ausgehend von dem Projektionsmodul eines Kraftfahrzeugscheinwerfers der eingangs genannten Art wird zur Lösung der Aufgabe der vorliegenden Erfindung vorgeschlagen, dass die Projektionslinse als eine erfindungsgemäße transparente Optik ausgebildet ist. Die vorliegende Erfindung betrifft also auch Projektionsmodule für Kraftfahrzeugscheinwerfer, die eine Projektionslinse zum Abbilden von gebündeltem Licht auf der Fahrbahn vor dem Fahrzeug zur Erzeugung einer gewünschten Lichtverteilung umfassen, wobei in die Projektionslinse in der oben beschriebenen Weise optisch wirksame Elemente eingebracht sind.

Schließlich wird ausgehend von der Beleuchtungseinrichtung eines Kraftfahrzeugs der eingangs genannten Art zur Lösung der Aufgabe vorgeschlagen, dass die mindestens eine transparente Optik eine erfindungsgemäße transparente Optik ist. Die Erfindung betrifft also auch Kraftfahrzeugbeleuchtungseinrichtungen, die eine nach einem Mehrschicht-Spritzgussverfahren hergestellte transparente Optik umfassen, durch die bei eingeschalteter Beleuchtungseinrichtung Lichtstrahlen hindurchtreten, und in die in der oben beschriebenen Weise optisch wirksame Elemente eingebracht worden sind.

Gemäß einer vorteilhaften Weiterbildung der Erfindung wird vorgeschlagen, dass die Beleuchtungseinrichtung als ein Kraftfahrzeugscheinwerfer ausgebildet ist. Der Scheinwerfer umfasst vorteilhafterweise ein Projektionsmodul, das mindestens eine Lichtquelle zum Aussenden von Licht, mindestens eine Primäroptik zum Bündeln des ausgesandten Lichts sowie mindestens eine Projektionslinse zum Abbilden des gebündelten Lichts auf einer Fahrbahn vor dem Fahrzeug zur Erzeugung einer gewünschten Lichtverteilung aufweist, wobei die Projektionslinse als erfindungsgemäße transparente Optik ausgebildet ist.

Weitere Merkmale und Vorteile der Erfindung werden nachfolgend anhand der Figuren näher erläutert. Dabei kann die vorliegende Erfindung die dargestellten und beschriebenen Merkmale auch einzeln oder in einer beliebigen Kombination, auch abweichend von der beschriebenen oder gezeigten Kombination, umfassen. Es zeigen:
- Figur 1: eine erfindungsgemäße Beleuchtungseinrichtung eines Kraftfahrzeugs gemäß einer bevorzugten Ausführungsform;
- Figur 2: ein erfindungsgemäßes Projektionsmodul gemäß einer ersten bevorzugten Ausführungsform;
- Figur 3: ein erfindungsgemäßen Projektionsmodul gemäß einer weiteren bevorzugten Ausführungsform;
- Figur 4: ein erfindungsgemäßes Projektionsmodul gemäß einer weiteren bevorzugten Ausführungsform;
- Figur 5: das Projektionsmodul aus Figur 4 mit eingezeichnetem Verlauf des von einer der Lichtquellen des Projektionsmoduls ausgesandten Lichts;
- Figur 6: das Projektionsmodul aus Figur 4 mit eingezeichnetem Verlauf des von beiden Lichtquellen des Projektionsmoduls ausgesandten Lichts;
- Figur 7: eine erfindungsgemäße Projektionslinse eines Projektionsmoduls gemäß den Figuren 4 bis 6 mit auf der Linsenfläche eingezeichneten Durchtrittspunkten der Lichtstrahlen;
- Figur 8: eine erfindungsgemäße Projektionslinse gemäß einer weiteren bevorzugten Ausführungsform;
- Figur 9: eine erfindungsgemäße Projektionslinse gemäß einer weiteren bevorzugten Ausführungsform;
- Figur 10: eine erfindungsgemäße Projektionslinse gemäß einer weiteren bevorzugten Ausführungsform;
- Figur 11: eine Projektionslinse, die jedoch nicht Bestandteil der vorliegenden Erfindung ist; und
- Figur 12: eine weitere Projektionslinse, die ebenfalls nicht Bestandteil der vorliegenden Erfindung ist.

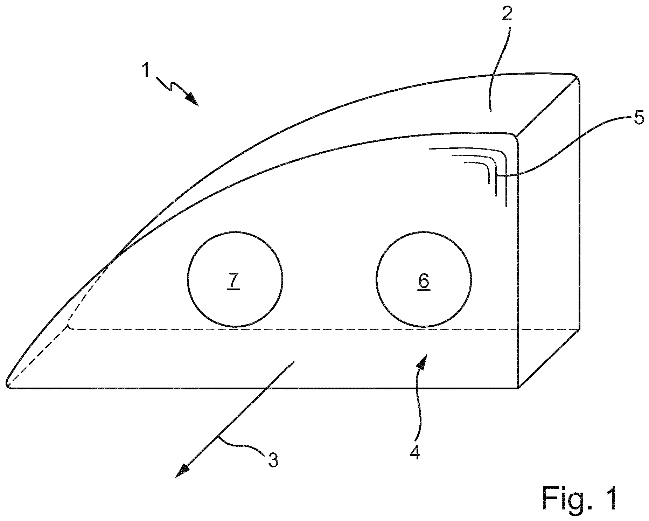

In Figur 1 ist eine erfindungsgemäße Beleuchtungseinrichtung in ihrer Gesamtheit mit dem Bezugszeichen 1 bezeichnet. In dem dargestellten Ausführungsbeispiel ist die Beleuchtungseinrichtung 1 als ein Kraftfahrzeugscheinwerfer ausgebildet. Selbstverständlich könnte die erfindungsgemäße Beleuchtungseinrichtung jedoch auch als eine Kraftfahrzeugleuchte, insbesondere als eine Front-, Heck- oder Seitenleuchte ausgebildet sein.

Der Scheinwerfer 1 umfasst ein Gehäuse 2, das vorzugsweise aus Kunststoff gefertigt ist. Das Gehäuse 2 weist in Lichtaustrittsrichtung 3 eine Lichtaustrittsöffnung 4 auf, die mittels einer transparenten Abdeckscheibe 5 verschlossen ist. Die Abdeckscheibe 5 besteht vorzugsweise ebenfalls aus Kunststoff. Die Abdeckscheibe 5 kann als klare Scheibe oder als Streuscheibe ausgebildet sein. Im Inneren des Scheinwerfergehäuses 2 sind Lichtmodule und/oder Leuchtenmodule zur Erzeugung unterschiedlicher Lichtverteilungen angeordnet. In dem dargestellten Ausführungsbeispiel sind in dem Gehäuse 2 ein Lichtmodul 6 und ein Leuchtenmodul 7 angeordnet. Die beiden Module 6, 7 sind in Figur 1 nur schematisch dargestellt.

Das Lichtmodul 6 kann zur Erzeugung einer beliebigen Lichtverteilung des Kraftfahrzeugscheinwerfers 1 eingesetzt werden. Denkbar ist beispielsweise, dass das Lichtmodul 6 eine Abblendlicht-, eine Fernlicht-, eine Stadtlicht-, eine Landstraßenlicht-, eine Autobahnlicht-, eine Nebellicht- oder eine beliebig andere Lichtverteilung erzeugt, insbesondere auch eine beliebige adaptive Lichtverteilung. Das Lichtmodul 6 kann auch zur Erzeugung einer beliebigen Kombination von mehreren der genannten Lichtverteilungen ausgelegt sein. Das Leuchtenmodul 7 kann zur Erzeugung beliebiger Leuchtfunktionen ausgebildet sein. Insbesondere kann das Leuchtmodul eine Blinklicht-, Tagfahrlicht-, Positionslicht- oder sonstige Lichtverteilung einer Leuchtenfunktion erzeugen. Auch das Leuchtmodul 7 kann zur Erzeugung einer beliebigen Kombination von mehreren der genannten Leuchtfunktionen dienen.

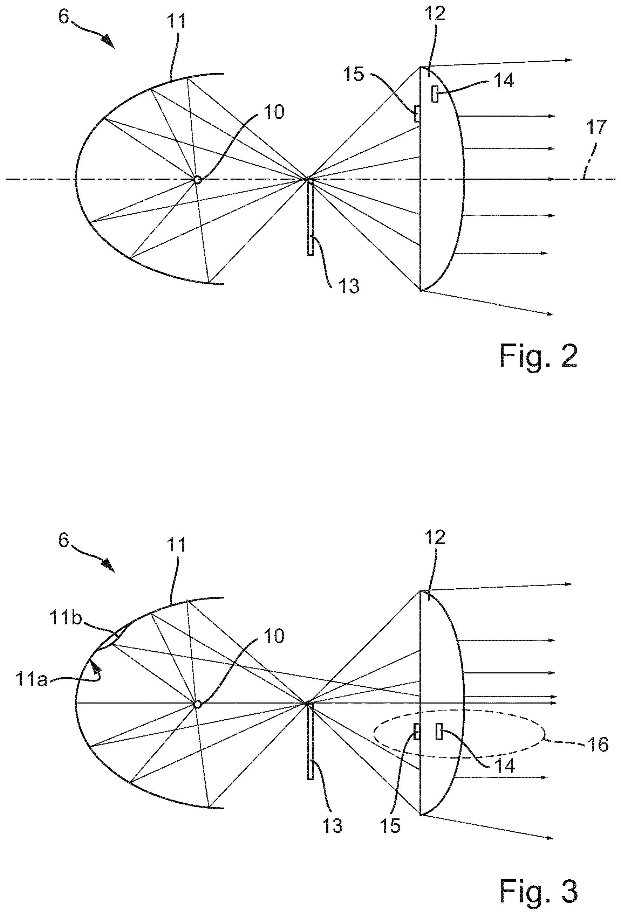

Das Lichtmodul 6 der erfindungsgemäßen Beleuchtungseinrichtung 1 ist als ein Projektionsmodul ausgebildet, wie es beispielsweise in den Figuren 2 bis 6 in unterschiedlichen Ausführungsformen dargestellt ist. Das Projektionsmodul 6 aus den Figuren 2 und 3 umfasst eine Lichtquelle 10 zum Aussenden von Licht. Die Lichtquelle 10 kann als eine Halogen- oder Gasentladungslampe oder als eine oder mehrere Halbleiterlichtquellen, insbesondere Leuchtdioden (LEDs), ausgebildet sein. Das von der Lichtquelle 10 ausgesandte Licht wird mittels einer Primäroptik 11 gebündelt. Die Primäroptik 11 ist in dem dargestellten Ausführungsbeispiel als ein Reflektor ausgebildet. Beim Einsatz mehrerer Lichtquellen 10 ist es denkbar, dass jeder der Lichtquellen 10 eine eigene Primäroptik 11 zugeordnet ist oder sich zumindest ein Teil der Lichtquellen 10 eine gemeinsame Primäroptik 11 teilt, wobei den übrigen Lichtquellen 10 dann eine andere Primäroptik 11 zugeordnet sein kann. Statt als Reflektor, wie in den Figuren 2 bis 6 dargestellt, kann die Primäroptik 11 auch eine sogenannte Vorsatzoptik aus einem transparenten Material mit totalreflektierenden Eigenschaften aufweisen. Die Vorsatzoptik kann hindurchtretendes Licht durch Brechung und/oder Totalreflexion an den Grenzflächen der Vorsatzoptik bündeln. Vorsatzoptiken werden insbesondere bei LED-Lichtquellen 10 eingesetzt, wobei dann vorzugsweise jeder LED-Lichtquelle 10 eine eigene Vorsatzoptik zugeordnet ist.

Das von der Primäroptik 11 gebündelte Licht wird von einer Sekundäroptik 12, die in dem dargestellten Ausführungsbeispiel als eine Projektionslinse ausgebildet ist, zur Erzeugung einer gewünschten Lichtverteilung auf die Fahrbahn vor das Fahrzeug projiziert. Falls durch das Projektionsmodul 6 eine abgeblendete Lichtverteilung mit einer im Wesentlichen horizontal verlaufenden Helldunkelgrenze erzeugt werden soll, ist im Strahlengang zwischen der Primäroptik 11 und der Sekundäroptik 12 eine Blendenanordnung 13 vorgesehen. In dem dargestellten Ausführungsbeispiel ist eine vertikal angeordnete Blendenanordnung 13 vorgesehen. Eine Oberkante der Blendenanordnung 13 wird von der Sekundäroptik 12 als Helldunkelgrenze der abgeblendeten Lichtverteilung auf der Fahrbahn vor dem Fahrzeug abgebildet. Es ist denkbar, dass die Blendenanordnung 13 nicht vertikal, sondern horizontal, vorzugsweise entlang einer optischen Achse 17 des Projektionsmoduls 6, verläuft. In diesem Fall wird dann die Vorderkante der Blendenanordnung durch die Sekundäroptik 12 als Helldunkelgrenze der Lichtverteilung abgebildet.

Bei der Projektionslinse 12 des Projektionsmoduls 6 handelt es sich um eine erfindungsgemäße transparente Optik des Scheinwerfers 1. Die transparente Optik 12 ist nach einem Mehrschicht-Spritzgussverfahren hergestellt, wie es beispielsweise in der nachveröffentlichten DE 10 2010 033 902 beschrieben ist. Gemäß der vorliegenden Erfindung ist im Rahmen des Spritzgussverfahrens mindestens ein optisch wirksames Element zwischen zwei Schichten der Optik 12 eingebracht. Das optisch wirksame Element absorbiert hindurchtretende Lichtstrahlen zumindest teilweise. In Figur 2 ist ein in die transparente Optik 12 eingespritztes optisch wirksames Element mit dem Bezugszeichen 14 bezeichnet. Ein an eine Außenseite der Optik 12 angespritztes optisch wirksames Element, das jedoch nicht von der vorliegenden Erfindung umfasst ist, ist mit dem Bezugszeichen 15 bezeichnet. Das optisch wirksame Element 15 kann an eine beliebige Fläche der Optik 12 angespritzt sein. In dem dargestellten Beispiel ist es auf eine im Wesentlichen plane, der Primäroptik 11 zugewandten Fläche angespritzt. Es ist denkbar, dass das optisch wirksame Element 14 in die Optik 12 eingebracht oder beide Elemente 14, 15 in der Optik 12 vorgesehen sind. Es können auch beliebig viele der Elemente 14 bzw. 15 in der Optik 12 vorgesehen sein.

Durch das Einbringen des mindestens einen optisch wirksamen Elements 14, 15 in die transparente Optik 12 im Rahmen der Herstellung der Optik 12 mittels eines Mehrschicht-Spritzgussverfahrens können die optisch wirksamen Elemente 14, 15 besonders einfach, schnell und kostengünstig in die Optik 12 eingebracht werden. Zudem können die optisch wirksamen Elemente 14, 15 mit besonders hoher Genauigkeit und wiederholbar, das heißt reproduzierbar in der Optik 12 angeordnet werden. Die hohe Genauigkeit, mit der die optisch wirksamen Elemente 14, 15 in der transparenten Optik 12 angeordnet werden können, ist eine wichtige Voraussetzung dafür, dass die resultierende, durch das Lichtmodul 6 erzeugte Lichtverteilung durch die optisch wirksamen Elemente 14, 15 nicht so weit beeinträchtigt wird, dass beispielsweise eine subjektive Verschlechterung der Lichtverteilung eintritt oder gesetzliche Anforderungen an die Lichtverteilung nicht mehr eingehalten werden können. Insbesondere ist das optische System 6 derart ausgebildet, dass die optisch wirksamen Elemente 14, 15, die in der Optik 12 angeordnet sind, definierte fotometrische Mindestanforderungen erfüllen.

Die optisch wirksamen Elemente 14, 15 können auch als Designelemente dienen und sind beispielsweise als absorbierende, teilabsorbierende, verspiegelte, teilverspiegelte, eingefärbte oder streuende Bereiche in der transparenten Optik 12 ausgebildet.

Bei dem in Figur 2 gezeigten Ausführungsbeispiel sind die optisch wirksamen Elemente 14, 15 im Strahlengang der durch die transparente Optik 12 hindurchtretenden Lichtstrahlen angeordnet und müssen deshalb bei der Auslegung der transparenten Optik 12 und der übrigen Bauteile 10, 11, 13 des Projektionsmoduls 6 berücksichtigt werden, damit die resultierende Lichtverteilung den Anforderungen, insbesondere den gesetzlichen Anforderungen, genügt.

Bei dem Ausführungsbeispiel aus Figur 3 sind Bauteile des Projektionsmoduls 6 bewusst derart ausgebildet, dass der Strahlengang des optischen Systems gezielt so ausgelegt ist, dass die transparente Optik 12 über ihre Lichtdurchtrittsfläche betrachtet eine inhomogene Dichteverteilung der während des Betriebs der Beleuchtungseinrichtung 1 hindurchtretenden Lichtstrahlen aufweist. Dadurch ergeben sich Bereiche 16 mit einer niedrigereren Strahldichte als in den übrigen Bereichen der Lichtdurchtrittsfläche der transparenten Optik 12. Das mindestens eine optisch wirksame Element 14, 15 ist in dem Bereich 16 niedriger Strahldichte ausgebildet. Die optisch wirksamen Elemente 14, 15 sind vorzugsweise in Form von absorbierenden, teilabsorbierenden, verspiegelten, teilverspiegelten oder mattierten Flächen ausgebildet. Die Bereiche 16 niedrigerer Strahldichte werden auch als Verarmungsbereiche der Strahlverteilung im Bereich der Hauptebene der Projektionslinse 12 bezeichnet. Damit ist es möglich, dass das Einbringen der optisch wirksamen Elemente 14, 15 in den Verarmungsbereich 16 die resultierende Lichtverteilung des Lichtmoduls 6 nicht oder nur geringfügig beeinträchtigt. Zur Beeinflussung des Strahlengangs des optischen Systems 6, insbesondere zur Ausbildung der Verarmungsbereiche 16 in der Hauptebene der Projektionslinse 12, weist die Reflexionsfläche 11a des Reflektors 11 eine in das Reflektorinnere gerichtete Wölbung 11b auf. Selbstverständlich ist es denkbar, dass der Strahlengang des optischen Systems 6 durch eine anders ausgestaltete Variation des Reflektors 11 und/oder durch eine Variation anderer Bauteile des Projektionsmoduls 6 erzielt werden kann.

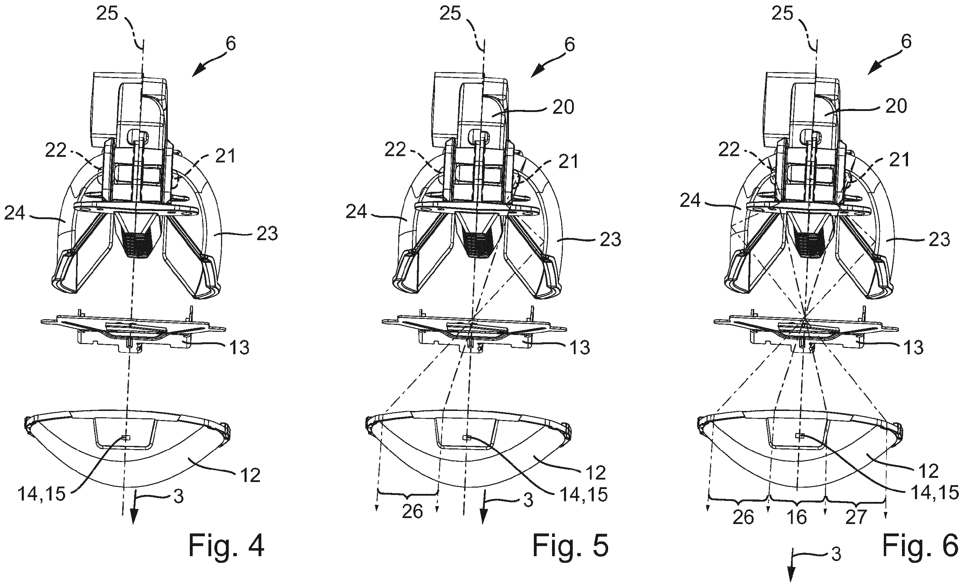

Xxx Die Figuren 4 bis 6 zeigen ein erfindungsgemäßes Projektionsmodul 6 in einer anderen Ausführungsform. Das Projektionsmodul 6 ist in den Figuren 4 bis 6 als ein Leuchtdioden (LED) -Projektionsmodul ausgebildet. Das LED-Modul 6 umfasst einen im Wesentlichen rechteckigen Kühlkörper 20. Auf zwei gegenüberliegenden Seiten des Kühlkörpers 20 sind Lichtquellen in Form von LEDs 21, 22 angeordnet. Die LEDs 21, 22 strahlen Licht in zwei gegenüberliegende, durch den im Wesentlichen vertikal stehenden Kühlkörper 20 unterteilte Halbräume aus. Eine Hauptabstrahlrichtung der LEDs 21, 22 verläuft im Wesentlichen senkrecht zu der Lichtaustrittsrichtung 3 beziehungsweise zu einer optischen Achse 25 des Lichtmoduls 6. Das ausgesandte Licht wird durch Reflektoren 23, 24 gebündelt und umgelenkt. Die Reflektoren 23, 24 sind als sogenannte Halbschalenreflektoren ausgebildet und seitlich an dem Kühlkörper 20 befestigt. Das von den Reflektoren 23, 24 gebündelte Licht wird mittels einer Projektionslinse 12 zur Erzeugung der gewünschten Lichtverteilung auf die Fahrbahn vor das Kraftfahrzeug projiziert. Zwischen der Primäroptik 23, 24 und der Sekundäroptik 12 ist die Blendenanordnung 13 zur Erzeugung einer Helldunkelgrenze einer abgeblendeten Lichtverteilung angeordnet. Selbstverständlich kann das Projektionsmodul 6 auch ohne Blendenanordnung 13 (z.B. zur Erzeugung einer Lichtverteilung ohne Helldunkelgrenze) oder kann die Blendenanordnung 13 in den Strahlengang hinein und aus diesem heraus bewegbar ausgebildet sein (z.B. zum Umschalten zwischen einer abgeblendeten Lichtverteilung und einer Fernlichtverteilung).

In Figur 5 ist Projektionssystem 6 aus Figur 4 dargestellt. Zusätzlich sind Verläufe von Lichtstrahlen eingezeichnet, die dem von der linken LED 21 ausgesandten Licht entsprechen. Demnach trifft das von der LED 21 ausgesandte und von dem Reflektor 23 reflektierte und umgelenkte Lichtbündel auf einen Bereich 26 der Projektionslinse 12 in der Hauptebene der Projektionslinse 12.

In Figur 6 ist das Projektionsmodul 6 aus Figur 4 eingezeichnet, wobei neben den Strahlverläufen des von der LED 21 ausgesandten Lichts auch Verläufe von Lichtstrahlen des von der rechten LED 22 ausgesandten und von dem Reflektor 24 reflektierten und umgelenkten Lichts eingezeichnet sind. Demnach trifft das Lichtbündel der LED 22 in einem Bereich 27 einer Hauptebene der Projektionslinse 12 auf die Projektionslinse 12.

Anhand der Figur 6 ist deutlich die inhomogene Strahldichteverteilung im Bereich der Projektionslinsen-Hauptebene mit Bereichen 26, 27 mit hoher Strahldichte und Bereichen 16 geringerer Strahldichte zu erkennen. Es ist besonders vorteilhaft, wenn das mindestens eine optische Element 14, 15 in den Verarmungsbereichen 16 der Projektionslinse 12 angeordnet sind. Dabei können die optisch wirksamen Elemente 14, 15 - wie gesagt -in die Projektionslinse 12 eingespritzt sein. Die transparente Optik 12 weist optisch wirksame Elemente 14, 15 im Inneren der Optik 12 auf.

Da die optisch wirksamen Elemente 14, 15 in der Projektionslinse 12 nahe der Austrittspupille des optischen Systems 6 liegen, werden sie nicht scharf auf der Fahrbahn vor dem Fahrzeug abgebildet. Die vorgeschlagene Ausgestaltung der Projektionslinse 12 ermöglicht neue Designkonzepte und damit ein völlig neuartiges Erscheinungsbild von Projektionsscheinwerfern 1. Insbesondere durch das Einbringen von optisch wirksamen Elementen 14, 15 in das Innere der Projektionslinse 12 wird ein dreidimensionaler Designeffekt erzielt. Die Möglichkeit einer unterschiedlichen Wahl von Material und Farbe des Optikkörpers der Linse 12 und des eingespritzten optisch wirksamen Elements 14, 15 lassen ein individuelles Design zu, ohne den technischen Aufbau des Projektionsmoduls 6 verändern zu müssen. Durch das Einbringen der optisch wirksamen Elemente 14, 15 als Teil eines Mehrschicht-Spritzgussverfahrens zur Herstellung der transparenten Optik 12 können die Elemente 14, 15 besonders einfach, schnell und zuverlässig in der Optik 12 angeordnet werden.

Die Realisierung einer Projektionslinse 12 mit eingebrachten optisch wirksamen Elementen 14, 15 ist durch das Fertigungsverfahren des Multilayer-Spritzgusses bei Kunststoffen möglich. Bei diesem Verfahren kann eine Schicht mit einem anderen Material als dem Linsenmaterial beziehungsweise mit einer anderen Farbe als der Farbe des Linsenmaterials gespritzt werden, wobei diese Schicht dann das mindestens eine optisch wirksame Element 14, 15 bildet. Es ist auch denkbar, aber nicht von der Erfindung umfasst, dass die optisch wirksamen Elemente 14, 15 durch Einlegeteile oder Einlegefolien zwischen zwei Schichten der Projektionslinse 12 eingebracht und dann von dem Kunststoffmaterial der Projektionslinse 12 umspritzt werden.

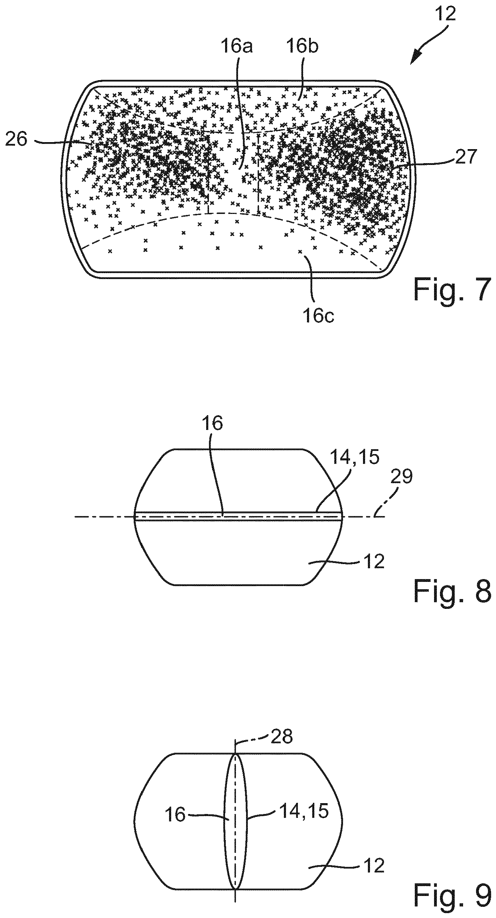

Figur 7 zeigt die Projektionslinse 12 des Projektionsmoduls 6 aus den Figuren 4 bis 6 in einer Ansicht entgegen der Lichtaustrittsrichtung 3. Die Linse 12 hat eine annähernd rechteckige Form. Zumindest die Ober- und Unterseite der Linse 12 ist gegenüber herkömmlichen Linsen mit einem im Wesentlichen runden Querschnitt deutlich abgeflacht. In der Abbildung der Figur 7 sind Durchtrittspunkte der durch die Projektionslinse 12 hindurchtretenden Lichtstrahlen als kleine Kreuze dargestellt. Es ist deutlich zu erkennen, dass die Bereiche 26 und 27 als Bereich mit einer besonders hohen Strahldichte ausgebildet sind. In diese Bereiche 26, 27 gelangt der überwiegende Teil des von den LEDs 21, 22 ausgesandten und von den Reflektoren 23, 24 gebündelten und umgelenkten Lichts.

Zudem ist anhand der Figur 7 gut zu erkennen, dass insgesamt drei Verarmungsbereiche 16a, 16b, 16c in der Projektionslinse 12 ausgebildet sind, in denen die Dichte der Durchtrittspunkte der Lichtstrahlen wesentlich kleiner ist als in den Bereichen 26, 27. Am kleinsten ist die Strahldichte in einem unteren Verarmungsbereich 16c, der kreissegmentförmig an der Unterseite der Projektionslinse 12 ausgebildet ist. Ein virtueller Bogen zur Begrenzung des unteren Verarmungsbereiches 16c beginnt und endet in etwa in den unteren Ecken der Projektionslinse 12. Ebenfalls eine relativ geringe Strahldichte ist in einem kreissegmentförmigen oberen Verarmungsbereich 16b sowie in einem etwa zentralen Verarmungsbereich 16a gegeben. Der oberen Verarmungsbereich 16b erstreckt sich in etwa kreissegmentförmig an der Oberseite der Projektionslinse 12. Ganz grob gesagt kann man auch hier sagen, dass ein virtueller Bogen zur Begrenzung des oberen Verarmungsbereichs 16b in den oberen Ecken bzw. in der Nähe der Ecken der Projektionslinse 12 beginnt und endet. Der zentrale Verarmungsbereich 16a erstreckt sich in etwa im Zentrum der Projektionslinse 12 von der Unterseite des oberen Verarmungsbereichs 16b bis zur Oberseite des unteren Verarmungsbereichs 16c.

Bei der Projektionslinse 12 aus Figur 7 könnten also in besonders vorteilhafter Weise optisch wirksame Elemente 14, 15 in den Verarmungsbereichen 16a, 16b und/oder 16c angeordnet werden. So könnten beispielsweise optisch wirksame Elemente 14, 15 entlang einer vertikalen Mittelebene 28 angeordnet werden, wie dies beispielsweise in Figur 9 dargestellt ist. Der Bereich, in dem die optisch wirksamen Elemente 14, 15 in dem Ausführungsbeispiel aus Figur 9 angeordnet sind, umfasst also den zentralen Bereich 16a, dessen Verlängerung nach oben in den oberen Bereich 16b sowie dessen Verlängerung nach unten in den unteren Bereich 16c, jeweils in etwa entlang der vertikalen Mittelebene 28 der Linse 12.

Es wäre denkbar, dass das optische System 6 bzw. einzelne oder mehrere Bauteile des Systems 6 derart ausgelegt sind, dass sich die Verarmungsbereiche 16a, 16b, 16c nicht entlang einer vertikalen Mittelebene 28 (vgl. Figur 9), sondern beispielsweise entlang einer horizontalen Mittelebene 29 erstrecken, wie dies beispielhaft in Figur 8 dargestellt ist. Dort verläuft der Verarmungsbereich 16 als horizontaler Streifen durch die Mitte der Linse 12. Der Verarmungsbereich 16 kann als zusammenhängender geschlossener Bereich ausgebildet sein oder aus mehreren Einzelbereichen 16a, 16b, 16c bestehen.

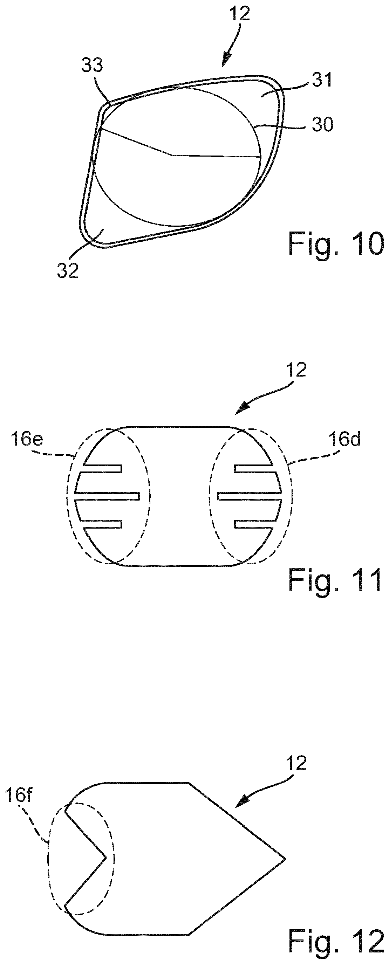

Des Weiteren ist es denkbar, dass ein optisches System, wie beispielsweise das Projektionsmodul 6, einen mittleren Linsenbereich einer bestimmten Größe benötigt, um bestimmte Mindestanforderungen an die Lichtverteilung, insbesondere hinsichtlich der Lichtstärkeverteilung, zu erreichen. Designtechnisch ist aber unter Umständen eine größere Linse 12 erwünscht, die in den Randbereichen insbesondere aus Designgründen verlängert, gebogen oder als eine beliebige Freiform ausgeführt werden kann. Eine entsprechende Linse ist beispielsweise in Figur 10 dargestellt.

Die Projektionslinse 12 aus Figur 10 weist in der Draufsicht entgegen der Lichtaustrittsrichtung 3 eine parallelogrammähnliche Kontur auf. Im Inneren der Linse 12 ist ein mittlerer Linsenbereich 30 eingezeichnet, der eine runde beziehungsweise ovale Form aufweist. Der Linsenbereich 30 entspricht der Größe des optischen Systems, die erforderlich ist, um bestimmte Mindestanforderungen zu erreichen. Designtechnisch ist der mittlere Linsenbereich 30 zur Bildung der spitzen Winkel des Parallelogramms durch Bereiche 31, 32 verlängert. Sowohl der mittlere Linsenbereich 30 als auch die Verlängerungsbereiche 31, 32 der Projektionslinse 12 sind von einem umlaufenden Rand 33 umgeben. Sowohl die Verlängerungsbereiche 31, 32 als auch der umlaufende Randbereich 33 der Projektionslinse sind zur Erfüllung der optischen Eigenschaften der Projektionslinse 12 nicht erforderlich. Diese werden allein durch den mittleren Linsenbereich 30 erfüllt. Damit Licht, das durch die Designflächen 31, 32, 33 hindurchtritt, nicht als Störlicht in der Lichtverteilung in Erscheinung tritt, werden die designten Randbereiche 31, 32, 33 in oder auf der Linse 12 mit geeigneten eingespritzten oder aufgebrachten Licht absorbierenden, teilabsorbierenden, verspiegelten, teilverspiegelten, eingefärbten und/oder mattierten Flächen versehen. Insbesondere wird vorgeschlagen, dass die Designbereiche 31, 32, 33 durch geeignet ausgebildete optisch wirksame Elemente 14, 15 in der Linse 12 abgeschattet werden.

Durch das Einbringen der optisch wirksamen Elemente 14, 15 innerhalb des Linsenkörpers wird ein dreidimensionaler Designeffekt erzielt. Das Material und die Farbe des eingespritzten Designelements 14, 15 kann von Material und Farbe des Linsenkörpers 12 abweichen, so dass ein individuelles Design möglich ist, ohne dass der technische Aufbau des Projektionsmoduls 6 verändert werden müsste. Die Umsetzung einer Projektionslinse 12 mit eingespritzten Elementen 14, 15 ist durch das Fertigungsverfahren des Multilayer-Spritzgusses bei Kunststoffen schnell und einfach möglich. Dabei kann dann eine Schicht mit einem anderen Material beziehungsweise einer anderen Farbe gespritzt werden.

In den Figuren 11 und 12 sind weitere Formen einer Projektionslinse 12 dargestellt, die jedoch nicht von der Erfindung umfasst sind. Dabei sind Verarmungsbereiche 16d, 16e beziehungsweise 16f seitlich an der Projektionslinse 12 ausgebildet. In dem Beispiel der Figur 11 sind die optischen Elemente, entsprechend den Elementen 14 und 15 der zuvor beschriebenen Beispiele, dadurch realisiert, dass innerhalb der Verarmungsbereiche 16d, 16e schlitz- oder spaltförmige Bereich aus dem Linsenkörper 12 komplett ausgespart sind. In dem Beispiel der Figur 12 sind die optischen Elemente, entsprechend den Elementen 14 und 15 der zuvor beschriebenen Beispiele, dadurch realisiert, dass ein keilförmiger Bereich aus dem Linsenkörper 12 komplett ausgespart ist.

## Patentansprüche

1. Nach einem Mehrschicht-Spritzgussverfahren hergestellte transparente Optik (12) einer Beleuchtungseinrichtung (1) eines Kraftfahrzeugs, durch die bei eingeschalteter Beleuchtungseinrichtung (1) Lichtstrahlen hindurchtreten, wobei mindestens ein optisch wirksames Element (14) zwischen zwei Schichten der Optik (12) eingebracht ist, und wobei das mindestens eine optisch wirksame Element (14) hindurchtretende Lichtstrahlen zumindest teilweise absorbiert, **dadurch gekennzeichnet, dass** die transparente Optik (12) als eine Projektionslinse eines Projektionsmoduls (6) eines Kraftfahrzeugscheinwerfers (1) ausgebildet ist und dass das mindestens eine optisch wirksame Element (14) wie das Spritzen einer zusätzlichen Schicht im Rahmen des Mehrschicht-Spritzgussverfahrens hergestellt ist.

2. Transparente Optik (12) nach Anspruch 1, **dadurch gekennzeichnet, dass** das mindestens eine optisch wirksame Element (14) Licht abschattende, Licht streuende oder Licht umlenkende Eigenschaften aufweist.

3. Transparente Optik (12) nach Anspruch 1 oder 2, **dadurch gekennzeichnet, dass** die transparente Optik (12) während des Betriebs der Beleuchtungseinrichtung (1) eine inhomogene Dichteverteilung der durch ihre Lichtdurchtrittsfläche hindurchtretenden Lichtstrahlen aufweist, so dass sich Bereiche (16; 16a, 16b, 16c; 16d, 16e; 16f) mit einer niedrigeren Strahldichte als in anderen Bereichen (26, 27) der Lichtdurchtrittsfläche ergeben, wobei das mindestens eine optisch wirksame Element (14) in einem Bereich (16; 16a, 16b, 16c; 16d, 16e; 16f) niedrigerer Strahldichte ausgebildet ist.

4. Transparente Optik (12) nach Anspruch 3, **dadurch gekennzeichnet, dass** in den Bereichen (16; 16a, 16b, 16c; 16d, 16e; 16f) mit niedrigerer Strahldichte optisch wirksamen Elemente (14) in Form von absorbierenden, teilabsorbierenden, verspiegelten, teilverspiegelten oder mattierten Flächen angeordnet sind.

5. Transparente Optik (12) nach einem der Ansprüche 1 bis 4, **dadurch gekennzeichnet, dass** das mindestens eine optisch wirksame Element (14) aus einem anderen Material besteht oder eine andere Farbe aufweist als das angrenzende Material der transparenten Optik (12).

6. Transparente Optik (12) nach einem der Ansprüche 1 bis 5, **dadurch gekennzeichnet, dass** das Einbringen das mindestens einen optisch wirksamen Elements (14) im Rahmen der Herstellung der transparenten Optik (12) durch Einspritzen von Material und anschließendes Umspritzen mit Material der Optik (12) erfolgt.

7. Projektionsmodul (6) eines Kraftfahrzeugscheinwerfers (1), das Modul (6) umfassend mindestens eine Lichtquelle (10; 21, 22) zum Aussenden von Licht, mindestens eine Primäroptik (11; 23, 24) zum Bündeln des ausgesandten Lichts und mindestens eine Projektionslinse (12) zum Abbilden des gebündelten Lichts auf einer Fahrbahn vor dem Fahrzeug zur Erzielung einer gewünschten Lichtverteilung, **dadurch gekennzeichnet, dass** die Projektionslinse (12) gemäß einem der Ansprüche 1 bis 6 ausgebildet ist.

8. Beleuchtungseinrichtung (1) eines Kraftfahrzeugs, umfassend mindestens eine nach einem Mehrschicht-Spritzgussverfahren hergestellte transparente Optik (12), durch die bei eingeschalteter Beleuchtungseinrichtung (1) Lichtstrahlen hindurchtreten, **dadurch gekennzeichnet, dass** die mindestens eine transparente Optik (12) gemäß einem der Ansprüche 1 bis 6 ausgebildet ist.

9. Beleuchtungseinrichtung (1) nach Anspruch 8, **dadurch gekennzeichnet, dass** die Beleuchtungseinrichtung (1) als ein Kraftfahrzeugscheinwerfer ausgebildet ist.

10. Beleuchtungseinrichtung (1) nach Anspruch 9, **dadurch gekennzeichnet, dass** der Scheinwerfer ein Projektionsmodul (6) umfasst, das mindestens eine Lichtquelle (10; 21, 22) zum Aussenden von Licht, mindestens eine Primäroptik (11; 23, 24) zum Bündeln des ausgesandten Lichts sowie mindestens eine Projektionslinse (12) zum Abbilden des gebündelten Lichts auf einer Fahrbahn vor dem Fahrzeug zur Erzeugung einer gewünschten Lichtverteilung aufweist, wobei die mindestens eine transparente Optik (12) als die Projektionslinse des Projektionsmoduls (6) ausgebildet ist.

## Claims

1. A transparent lens (12), produced by a multi-layer injection molding process, of a lighting device (1) of a motor vehicle, through which lens beams of light pass when the lighting device (1) is switched on, and at least one optically acting element (14) is placed between two layers of the lens (12), and the at least one optically acting element (14) at least partially absorbs beams of light passing through, **characterized in that** the transparent lens (12) is embodied as a projection lens of a projection module (6) of a motor vehicle headlight (1); and that the at least one optically acting element (14), like the injection of an additional layer, is produced in the context of the multi-layer injection molding process.

2. The transparent lens (12) of claim 1, **characterized in that** the at least one optically acting element (14) has properties that shade light, scatter light, or deflect light.

3. The transparent lens (12) of claim 1 or 2, **characterized in that** the transparent lens (12), during the operation of the lighting device (1), has a nonhomogeneous density distribution of the beams of light passing through its light transmission face, so that regions (16; 16a, 16b, 16c; 16d, 16e; 16f) resut that have a lesser beam density than in other regions (26, 27) of the light transmission face, and the at least one optically acting element (14) is embodied in a region (16; 16a, 16b, 16c; 16d, 16e; 16f) of lower beam density.

4. The transparent lens (12) of claim 3, **characterized in that** optically acting elements (14) in the form of absorbent, partially absorbent, mirrored, partially mirrored, or matte faces are located in the regions (16; 16a, 16b, 16c; 16d, 16e; 16f) of lower beam density.

5. The transparent lens (12) of one of claims 1 through 4, **characterized in that** the at least one optically acting element (14) comprises a different material or has a different color from the adjoining material comprising the transparent lens (12).

6. The transparent lens (12) of one of claims 1 through 5, **characterized in that** the introduction of the at least one optically acting element (14) is effected in the context of the production of the transparent lens (12) by injection of material and subsequent injection-mold with material of the lens (12).

7. A projection module (6) of a motor vehicle headlight (1), the module (6) including at least one light source (10; 21, 22) for emitting light, at least one primary lens (11; 23, 24) for focusing the emitted light, and at least one projection lens (12) for projecting the focused light on a roadway ahead of the vehicle for achieving a desired light distribution, **characterized in that** the projection lens (12) is embodied in accordance with one of claims 1 through 6.

8. A lighting device (1) of a motor vehicle, including at least one transparent lens (12) produced by a multi-layer injection molding process, through which lens beams of light pass when the lighting device (1) is switched on, **characterized in that** the at least one transparent lens (12) is embodied in accordance with one of claims 1 through 6.

9. The lighting device (1) of claim 8, **characterized in that** the lighting device (1) is embodied as a motor vehicle headlight.

10. The lighting device (1) of claim 9, **characterized in that** the headlight includes a projection module (6), which includes at least one light source (10; 21, 22) for emitting light, at least one primary lens (11; 23, 24) for focusing the emitted light, and at least one projection lens (12) for projecting the focused light on a roadway ahead of the vehicle for achieving a desired light distribution, the at least one transparent lens (12) being embodied as a projection lens of the projection module (6).

## Revendications

1. Optique transparente (12) fabriquée selon un procédé de moulage par injection à plusieurs couches, d'un dispositif d'éclairage (1) d'un véhicule automobile, à travers de laquelle passent des rayons lumineux lorsque le dispositif d'éclairage (1) est allumé, au moins un élément optiquement actif (14) étant introduit entre deux couches de l'optique (12) et ledit au moins un élément optiquement actif (14) absorbant des rayons lumineux qui traversent, **caractérisée en ce que** l'optique transparente (12) est formée comme lentille de projection d'un module de projection (6) d'un projecteur de véhicule automobile (1) et **en ce que** ledit au moins un élément optiquement actif (14) est réalisé comme l'injection d'une couche supplémentaire dans le cadre du procédé de moulage par injection à plusieurs couches.

2. Optique transparente (12) selon la revendication 1, **caractérisée en ce que** ledit au moins un élément optiquement actif (14) présente des caractéristiques de cache de lumière, de dispersion de lumière ou de déviation de lumière.

3. Optique transparente (12) selon la revendication 1 ou 2, **caractérisée en ce que** l'optique transparente (12) présente, pendant le fonctionnement du dispositif d'éclairage (1), une répartition de densité inhomogène des rayons lumineux passant par sa surface de passage de lumière, si bien que se forment des zones (16 ; 16a, 16b, 16c ; 16d, 16e ; 16f) avec une densité de rayons plus faible que dans d'autres zones (26, 27) de la surface de passage de lumière, ledit au moins un élément optiquement actif (14) étant formé dans une zone (16 ; 16a,
16b, 16c ; 16d, 16e ; 16f) avec une densité de rayons plus faible.

4. Optique transparente (12) selon la revendication 3, **caractérisée en ce que** dans les zones (16 ; 16a,
16b, 16c ; 16d, 16e ; 16f) avec une densité de rayons plus faible, des éléments optiquement actifs (14) sont disposés sous forme de surfaces absorbantes, partiellement absorbantes, métallisées, partiellement métallisées ou rendues mattes.

5. Optique transparente (12) selon l'une des revendications 1 à 4, **caractérisée en ce que** ledit au moins un élément optiquement actif (14) est réalisé en un autre matériau ou présente une couleur différente que le matériau attenant de l'optique transparente (12).

6. Optique transparente (12) selon l'une des revendications 1 à 5, **caractérisée en ce que** l'introduction dudit au moins un élément optiquement actif (14) est mise en oeuvre dans le cadre de la fabrication de l'optique transparente (12) par injection de matériau suivie d'un surmoulage avec le matériau de l'optique (12).

7. Module de projection (6) d'un projecteur de véhicule automobile (1), le module (6) comprenant au moins une source lumineuse (10 ; 21, 22) pour émettre de la lumière, au moins une optique primaire (11 ; 23, 24) pour focaliser la lumière émise et au moins une lentille de projection (12) pour former une image de la lumière focalisée sur une chaussée devant le véhicule pour obtenir une répartition de lumière souhaitée, **caractérisé en ce que** la lentille de projection (12) est formée selon l'une des revendications 1 à 6.

8. Dispositif d'éclairage (1) d'un véhicule automobile, comprenant au moins une optique transparente (12) fabriquée selon un procédé de moulage par injection à plusieurs couches, à travers de laquelle passent des rayons lumineux lorsque le dispositif d'éclairage (1) est allumé, **caractérisé en ce que** ladite au moins une optique transparente (12) est formée selon l'une des revendications 1 à 6.

9. Dispositif d'éclairage (1) selon la revendication 8, **caractérisé en ce que** le dispositif d'éclairage (1) est formé comme projecteur de véhicule automobile.

10. Dispositif d'éclairage (1) selon la revendication 9, **caractérisé en ce que** le projecteur comprend un module de projection (6) qui comporte au moins une source lumineuse (10 ; 21, 22) pour émettre de la lumière, au moins une optique primaire (11 ; 23, 24) pour focaliser la lumière émise et au moins une lentille de projection (12) pour former une image de la lumière focalisée sur une chaussée devant le véhicule pour produire une répartition de lumière souhaitée, ladite au moins une optique transparente (12) étant formée comme la lentille de projection du module de projection (6).
